# EUROPÄISCHE PATENTANMELDUNG

(11) **EP 4 418 479 A1**
(43) Veröffentlichungstag der Anmeldung: **21.08.2024**
(21) Anmeldenummer: 24151577.4
(22) Anmeldetag: 12.01.2024
(51) Int. Cl.: H02G 3/22, B60R 16/02, F16L 5/10, H02B 1/30, H02G 15/013

(54) **KABELDURCHFÜHRUNG SOWIE VERFAHREN ZUR HERSTELLUNG EINER KABELDURCHFÜHRUNG**

(30) Priorität: 17.01.2023 DE 102023200338
(71) Anmelder: LEONI Bordnetz-Systeme GmbH, 97318 Kitzingen (DE)
(72) Erfinder: DEHN, Manfred, 97318 Kitzingen (DE)
(74) Vertreter: FDST Patentanwälte

(57) **Zusammenfassung**

Die Erfindung betrifft eine Kabeldurchführung (2) sowie ein Verfahren zur Herstellung einer Kabeldurchführung. Diese dient zur Durchführung eines Leitungsbündels (4) mit mehreren Einzelleitungen (6) durch einen Durchbruch einer Wand (16). Die Einzelleitungen (6) sind einzelweise oder gebündelt durch zumindest ein Dichtelement (10, 36) geführt und das zumindest eine Dichtelement (10, 36) liegt in zumindest einer Durchgangsöffnung (34) einer Hartkomponente (8) ein, die aus einem im Vergleich zum Dichtelement (10, 36) härteren Material ausgebildet ist. Die Hartkomponente (8) ist insbesondere von einem Gussmantel (12) umgeben. Durch diese Ausgestaltung ist ein zuverlässige Abdichtung sowohl bei der Herstellung als auch im späteren Einsatz erreicht.

## Beschreibung

Die Erfindung betrifft eine Kabeldurchführung sowie ein Verfahren zur Herstellung einer solchen Kabeldurchführung.

Unter Kabeldurchführung wird vorliegend allgemein ein Bauteil verstanden, mit dem ein Leitungsbündel, welches mehrere Einzelleitungen aufweist, abgedichtet durch einen Durchbruch einer Wand geführt wird. Beispielsweise handelt sich um eine Wand eines Bauteils bei einem Kraftfahrzeug, speziell zur Trennung eines Nassbereich von einem Trockenbereich. Für eine derartige Kabeldurchführung werden häufig die Leitungsbündel von einem Gussmantel umgeben. In diesem Gussmantel liegt das Leitungsbündel abgedichtet in einem Durchbruch der Wand ein. Die Einzelleitungen sind dabei - abgesehen vom Gussmantel - typischerweise nicht von einem gemeinsamen Mantel umgeben. Die Einzelleitungen sind durch die Kabeldurchführung hindurchgeführt und erstrecken sich daher beidseitig der Kabeldurchführung.

Bei der Herstellung als auch später beim Einsatz einer solchen Kabeldurchführung bestehen besondere Anforderungen an die Abdichtung. Als Material für den Gussmantel wird häufig beispielsweise Polyurethan oder auch Gusspolyamid eingesetzt, welche im Ausgangszustand häufig wässrig sind. Dieses Gussmaterial kann bei ungenügender Abdichtung während des Gießprozesses unerwünscht austreten. Gleiches gilt auch wenn es sich bei dem Mantel um einen geschäumten Gussmantel handelt.

Im Einsatz muss darüber hinaus eine zuverlässige Dichtheit, beispielsweise gegenüber einem Eintritt von Wasser gewährleistet sein. Insbesondere die Längsdichtigkeit ist häufig ein Problem.

Ausgehend hiervon liegt der Erfindung die Aufgabe zugrunde, eine Kabeldurchführung anzugeben, welche speziell im Einsatz eine zuverlässige Abdichtung der Einzelleitungen gewährleistet und vorzugsweise auch eine gute Abdichtung bei der Herstellung.

Die Aufgabe wird gemäß der Erfindung gelöst durch eine Kabeldurchführung, die zur insbesondere abgedichteten Durchführung eines Leitungsbündels durch einen Durchbruch einer Wand vorgesehen ist. Das Leitungsbündel selbst weist mehrere Einzelleitungen auf. Bevorzugt handelt sich um ein elektrisches Leitungsbündel mit mehreren elektrischen Einzelleitungen. Bei den Einzelleitungen handelt es sich bevorzugt um einzelne Adern, also um von einem Isolationsmantel (Adermantel) umgebene elektrische Leiter. Grundsätzlich ist eine solche Kabeldurchführung jedoch auch für nicht elektrische Leitungsbündel mit nicht elektrischen Einzelleitungen oder für hybride Leitungsbündel mit elektrischen und nicht elektrischen Einzelleitungen anwendbar. Das Leitungsbündel und damit die Einzelleitungen sind durch die Kabeldurchführung hindurchgeführt und erstrecken sich daher beidseitig der Kabeldurchführung.

Die Einzelleitungen sind durch zumindest ein Dichtelement geführt. Weiterhin weist die Kabeldurchführung eine Hartkomponente mit zumindest einer Durchgangsöffnung auf, in der das zumindest eine Dichtelement einliegt und damit von der Hartkomponente umgeben ist. Die Hartkomponente besteht aus einem im Vergleich zum Dichtelement härteren Material. Weiterhin ist zumindest ein Teilbereich der Hartkomponente zusammen mit zumindest einem Abschnitt der mehreren Einzelleitungen mit einem Gussmantel umgeben.

Durch diese Ausgestaltung mit dem weichen Dichtelement und der Hartkomponente ist eine zuverlässige Abdichtung der jeweiligen Einzelleitungen sowohl beim Herstellen als auch im Einsatz zuverlässig gewährleistet. Durch die vergleichsweise härtere Hartkomponente wird insbesondere der Vorteil erzielt, dass diese eine exakte Positionierung in einem Durchbruch einer Wand, beispielsweise eine Werkzeugöffnung einer Werkzeugform, ermöglicht. Gleichzeitig kann durch die Hartkomponente auch eine gute Abdichtung zu diesem Durchbruch erreicht werden.

Weiterhin wird durch die Hartkomponente ein festes Gegenlager für das weiche Dichtelement bereitgestellt, sodass dieses in die Hartkomponente eingepresst werden kann, wodurch eine gute Abdichtung einerseits zwischen Dichtelement und Hartkomponente und andererseits zwischen Dichtelement und der jeweiligen Einzelleitungen erreicht wird.

Bei der Hartkomponente handelt es sich allgemein um ein separates Bauteil mit zumindest einer Durchgangsöffnung, durch die mithilfe des zumindest einen Dichtelements zumindest eine Einzelleitung abgedichtet hindurchgeführt wird. Die Hartkomponente weist typischerweise eine kreisrunde Außengeometrie auf. Im montierten Zustand liegt die Hartkomponente üblicherweise am umlaufenden Rand des Durchbruchs in der Wand an.

Im montierten Zustand wird daher das Leitungsbündel mithilfe der Kabeldurchführung abgedichtet durch den Durchbruch der Wand hindurchgeführt.

Die Hartkomponente weist bevorzugt eine Härte im Bereich von 83 Shore D bis 86 Shore D auf. Sie besteht bevorzugt aus einem Thermoplast, welcher insbesondere mit Füllstoffen, beispielsweise Glasfasern gefüllt ist. Der Anteil der Füllstoffe liegt beispielsweise im Bereich von 20% bis 40% und beispielsweise bei 30%. Als Hartkomponente wird insbesondere ein Polyamid mit Füllstoffen eingesetzt. Speziell wird PA 6 mit einem Glasfaseranteil im Bereich von 20% bis 40% und insbesondere von 30% eingesetzt.

Das Dichtelement weist bevorzugt eine Härte im Bereich von 10 Shore A bis 90 Shore A und insbesondere im Bereich zwischen 30 Shore A bis 60 Shore A auf.

Als Material für das Dichtelement wird bevorzugt ein Elastomer, wie beispielsweise ein Silikon oder auch ein Fluorelastomer eingesetzt.

Hervorzuheben ist, dass das zumindest eine Dichtelement in Verbindung mit der Hartkomponente insofern eine Doppelfunktion übernimmt, als dass es sowohl bei der Herstellung als auch später im Einsatz die Abdichtfunktion übernimmt. Bei der Herstellung verhindert das zumindest eine Dichtelement ein Austreten des Gussmaterials aus der Werkzeugform. Im Einsatz verhindert es den Durchtritt von Feuchtigkeit.

Der Gussmantel wird durch einen Gießprozess mithilfe einer als Gussform ausgebildeten Werkzeugform erzeugt. Sofern vorliegend von Gussmantel gesprochen wird, so handelt es sich hierbei um eine gegossene, gespritzte oder auch geschäumte Ummantelung der zuvor bereitgestellten Montageeinheit. Bei dieser Montageeinheit handelt es sich um ein vorgefertigtes Bauteil mit der Hartkomponente, dem zumindest einen Dichtelement und den einzelnen Leitungen des Leitungsbündels, die mithilfe des zumindest einen Dichtelements abgedichtet durch die Hartkomponente geführt sind.

In bevorzugter Ausgestaltung sind die Einzelleitungen jeweils einzelweise durch das zumindest eine Dichtelement geführt. Jede Einzelleitung liegt daher mit ihrem Isolationsmantel unmittelbar am Dichtelement an. Durch die einzelweise Durchführung durch das Dichtelement ist ein zuverlässiges Abdichten der jeweiligen Einzelleitungen erreicht.

Gemäß einer bevorzugten alternativen Variante sind mehrere Einzelleitungen gebündelt durch das Dichtelement hindurchgeführt, d. h. diese mehreren Einzelleitungen sind gemeinsam durch eine gemeinsame Öffnung im Dichtelement hindurchgeführt. Um ein zuverlässiges Abdichten dieser gebündelten Einzelleitungen zu erreichen, sind diese mehreren Einzelleitungen zumindest im Bereich des Dichtelements von einem Dichtmaterial umgeben.

In bevorzugter Weiterbildung liegen die Einzelleitungen zusammen mit dem Dichtmaterial in einem Dichtschlauch ein. Die Einzelleitungen bilden daher mit dem Dichtmaterial und in der bevorzugten Weiterbildung zusammen mit dem Dichtschlauch ein abgedichtetes Leitungsbündel aus, welches auch als kapillare Stoppleitung bezeichnet wird, da hierdurch die Einzelleitungen zuverlässig längsdicht abgedichtet sind. Dieses abgedichtete Leitungsbündel ist gemeinsam durch eine Öffnung im Dichtelement hindurchgeführt. Das Dichtmaterial insbesondere auch in Kombination mit dem Dichtschlauch bildet quasi einen Dichtpfropfen aus, welcher in einer Durchgangsöffnung im Dichtelement einliegt.

Bei den mehreren Einzelleitungen handelt es sich insbesondere um miteinander verdrillte Einzelleitungen, insbesondere um ein verdrilltes Leitungspaar. Bevorzugt liegt in einem Dichtschlauch lediglich ein einziges Bündel von miteinander verdrillten Einzelleitungen ein. Alternativ hierzu sind im Dichtschlauch mehrere Bündel von verdrillten Einzelleitungen angeordnet, beispielsweise mehrere verdrillte Leitungspaare.

Durch die Anordnung dieser mehreren Einzelleitungen innerhalb des Dichtschlauches zusammen mit dem Dichtmaterial ist eine zuverlässige und sichere Längsabdichtung dieser vorzugsweise miteinander verdrillten Einzelleitungen erreicht und gleichzeitig ist eine zuverlässige dichtende Anordnung im Dichtelement gewährleistet. Durch das Dichtmaterial werden einzelne Hohlräume zwischen den Einzelleitungen zuverlässig gefüllt, sodass eine Längsdichtigkeit gewährleistet ist. Durch den umgebenden Dichtschlauch wird weiterhin eine definierte Außengeometrie gewährleistet, insbesondere eine im Querschnitt gesehen kreisrunde Außengeometrie, sodass eine zuverlässige Abdichtung zwischen dem Dichtschlauch und dem Dichtelement gewährleistet ist.

Bei Bedarf kann auf den Dichtschlauch verzichtet sein. In diesem Fall umgibt das Dichtmaterial die Einzelleitungen und liegt unmittelbar am Dichtelement an.

Bei miteinander verdrillten Einzelleitungen oder sonstigen Leitungsbündel besteht in der Regel das Problem, dass bei diesen eine Längsabdichtung aufgrund der zwischen den Einzelleitungen vorliegenden Hohlräume schwierig ist.

Ein weiterer Vorteil der Durchführung dieses abgedichteten Leitungsbündels durch das Dichtelement besteht im Vergleich zu einer einzelweise Durchführung auch darin, dass insgesamt eine kompaktere Bauweise und ein geringerer Bauraumbedarf erreicht ist.

Die Variante mit dem zumindest einen abgedichteten Leitungsbündel wird gemäß einer Ausführungsvariante kombiniert mit weiteren, einzelweise durch das Dichtelement hindurchgeführten Einzelleitungen. Gemäß einer anderen Ausführungsvariante werden ausschließlich ein oder mehrere abgedichtete Leitungsbündel durch das Dichtelement hindurchgeführt, d. h. es werden bei dieser Variante keine einzelweise hindurchgeführte Einzelleitungen verwendet. Schließlich ist auch eine Ausführungsvariante ermöglicht, bei der ausschließlich einzelweise durchgeführte Einzelleitungen eingesetzt sind.

Bei dem Dichtschlauch handelt es sich insbesondere um einen Schrumpfschlauch. Hierunter wird allgemein ein schlauchförmiges Element verstanden, welches bei Wärmeeinwirkung schrumpft. Hierdurch wird eine besonders gute Abdichtung der im Dichtschlauch einliegenden Einzelleitungen erreicht.

Als Dichtschlauch werden gemäß einer Ausführungsvariante handelsübliche Standard-Schrumpfschläuche verwendet. Alternativ werden als Dichtschläuche Fluorschläuche, insbesondere Fluorschrumpfschläuche eingesetzt, also Schläuche, die aus einem Fluorpolymer bestehen. Schließlich werden alternativ beispielsweise Dichtschläuche und insbesondere Schrumpfschläuche aus Silikon verwendet.

Gemäß einer bevorzugten Weiterbildung ist an der Innenseite des Dichtschlauches ein Klebstoff angebracht. Über diesen ist eine zuverlässige dichte Verbindung mit dem innen einliegenden Dichtmaterial und/oder mit dem Isolationsmantel der Einzelleitungen gewährleistet.

Bei dem Dichtmaterial handelt es sich gemäß einer ersten Ausführungsvariante um ein pastöses Dichtmaterial. Beispielsweise wird ein elastomeres Material, insbesondere ein gummiartiges oder kautschukartiges Material verwendet. Bevorzugt wird als Dichtmaterial Butyl verwendet, welches insbesondere in Streifenform bereitgestellt wird. Grundsätzlich können auch andere Dichtmaterialien eingesetzt werden.

Das Dichtmaterial wird beispielsweise in Streifenform bereitgestellt und an den Einzelleitungen und zwischen diesen eingebracht und beispielsweise in diese eingeknetet, sodass die Zwischenhohlräume zuverlässig verschlossen werden.

Alternativ oder auch ergänzend zu der Verwendung eines pastösen Materials wird als Dichtmaterial ein Hotmelt-Dichtmaterial eingesetzt. Hierunter wird vorliegend allgemein ein Material verstanden, welches unter Wärmeeinwirkung zumindest erweicht oder (an-) schmilzt, sodass hierdurch die Hohlräume zwischen den Einzelleitungen zuverlässig abgedichtet werden. Hotmelt-Dichtstoffe sind grundsätzlich bekannt. Das Hotmelt-Dichtmaterial weist typischerweise bei Raumtemperatur eine feste Konsistenz auf.

Das Dichtmaterial wird gemäß einer bevorzugten Variante als Formkörper und insbesondere als ein sogenannter Dichtstern bereitgestellt. Der Formkörper weist allgemein einzelweise Aufnahmen für eine jeweilige Einzelleitungen auf. Diese sind insbesondere umfangsseitig ausgebildet und nach außen offen, so dass die Einzelleitungen in diese Aufnahmen von einer radial äußeren Seite eingelegt werden können.

Bevorzugt wird allgemein nach dem Anbringen des Dichtmaterials der Dichtschlauch angebracht.

Bei Verwendung eines pastösen Materials wird dieses alternativ zunächst in den Dichtschlauch eingeführt, so dass dieser also als ein Gefäß für das Dichtmaterial verwendet wird. Entweder befinden sich die Einzelleitungen bereits im Dichtschlauch oder werden erst anschließend durchgeführt.

Gemäß einer bevorzugten Ausgestaltung erfolgt eine separate Wärmebehandlung der von dem Dichtmaterial und dem Dichtschlauch umgebenen Einzelleitungen, bevor das dann abgedichtete Leitungsbündel durch das Dichtelement hindurchgeführt wird oder zumindest bevor die Gussmasse zur Ausbildung des Gussmantels eingebracht wird.

In zweckdienlicher Ausbildung weist die Kabeldurchführung einen radial abstehende Kragen auf. Dieser dient bevorzugt als Anlage- oder Befestigungsflansch, mit dem die Kabeldurchführung im montierten Zustand an der Wand anliegt und/oder an dieser beispielsweise über geeignete Befestigungselemente wie Schrauben befestigt ist. Der Kragen ist vorzugsweise, jedoch nicht zwingend vollständig umlaufend ausgebildet. Er ist beispielsweise symmetrisch und als Ringflansch ausgebildet. Bevorzugt weist er jedoch eine nicht runde Umfangsgeometrie auf und ist bevorzugt unsymmetrisch und nicht als Ringflansch ausgebildet.

Gemäß einer ersten Variante ist dieser Kragen am Gussmantel ausgebildet. Gemäß einer zweiten Variante ist er an der Hartkomponente angeordnet.

Da über den Kragen typischerweise die Befestigung an der Wand erfolgt muss dieser eine ausreichend hohe Härte und Steifigkeit aufweisen.

Bei der ersten Variante ist daher der Gussmantel ebenso wie die Hartkomponente aus einem harten Material, welches bevorzugt eine Härte im Bereich von 83 Shore D bis 86 Shore D aufweist. Die obigen Ausführungen zum Material der Hartkomponente gelten daher bei dieser ersten Variante vorzugsweise ebenfalls für den Gussmantel. Bevorzugt bestehen die Hartkomponente und der Gussmantel aus dem gleichen Material.

Der Vorteil der zweiten Variante ist darin zu sehen, dass die Hartkomponente bereits den Kragen aufweist und dieser daher bereits eine ausreichend hohe Eigensteifigkeit aufweist. In diesem Fall besteht der Gussmantel in bevorzugter Ausgestaltung aus einem im Vergleich zur Hartkomponente verschiedenen und insbesondere weicheren Material. Hierbei handelt es sich beispielsweise um einen Thermoplast, ein thermoplastisches Elastomer und insbesondere beispielsweise um ein Polyurethan oder auch um ein Polyamid. Speziell handelt es sich hierbei um einen unverstärkten Kunststoff, welcher also keine Füllstoffe aufweist. Bei dieser Ausführungsvariante kann aufgrund des weicheren Materials eine besonders gute Abdichtung der Einzelleitungen erreicht werden.

Bei beiden Varianten besteht prinzipiell die Möglichkeit, dass für die Hartkomponente sowie für den Gussmantel das gleiche Kunststoffmaterial, beispielsweise Polyamid, verwendet wird, jedoch bei Bedarf mit unterschiedlichen Anteilen an Füllstoffen, um beispielsweise unterschiedliche Härten einstellen zu können. Durch die Verwendung des gleichen Kunststoffmaterials wird eine gute stoffschlüssige Verbindung zwischen Hartkomponente und Gussmantel sichergestellt

Speziell wird für die Hartkomponente und/oder für den Gussmantel ein Gusspolyamid verwendet.

In bevorzugter Ausgestaltung wird der Gussmantel durch eine sogenannte in-situ-Polymerisation (insbesondere Gusspolyamid) ausgebildet. Ein solches Verfahren der in-situ-Polymerisation ist beispielsweise in der DE 10 2020 216 431 A1 oder auch der DE 10 2015 205 292 A1 beschrieben

Bei dem Gussmantel handelt es sich bevorzugt um eine sogenannte Tülle, die sich nur im Bereich des Durchbruchs durch die Wand und damit über lediglich eine begrenzte Länge von typischerweise wenigen Zentimetern (z.B. 5cm bis 20cm) erstreckt. Die Tülle liegt typischerweise im montierten Zustand an der Wand an und/oder im Durchbruch ein. Eine derartige Kabeldurchführung wird auch als "pass through" bezeichnet.

Alternativ handelt es sich bei dem Gussmantel um einen Kabelmantel eines beispielsweise formstabilen Kabelsatzes, speziell um einen Teilbereich des Kabelmantels, mit dem der Kabelsatz abgedichtet durch die Wand geführt werden soll.

Gemäß einer bevorzugten Ausgestaltung steht die Hartkomponente - insbesondere auch bei der zuvor beschriebenen ersten Variante - mit einem vorderen Teilbereich über den Gussmantel über. Der Gussmantel umgibt daher - in Längsrichtung des Leitungsbündels betrachtet - nur einen Teilabschnitt der Hartkomponente. Dies resultiert insbesondere aus dem Herstellungsverfahren, bei dem die Hartkomponente in einem Durchbruch der Werkzeugform bei der Ausbildung des Gussmantels zu Dichtzwecken einliegt und dieser Teilbereich daher nicht von dem Gussmantel umgeben wird. Ein nachfolgend auch als vorderes Ende bezeichnetes Ende der Hartkomponente liegt daher frei. Die Länge dieses überstehenden Teilbereichs entspricht vorzugsweise der Dicke des Durchbruchs der Werkzeugform. Die Länge liegt beispielsweise in einem Bereich zwischen 0,25 cm bis 3 cm und insbesondere im Bereich zwischen 0,5 cm bis 1,5 cm.

In bevorzugter Weiterbildung weist die Kabeldurchführung einen Dichtring auf, welcher zur Abdichtung der Kabeldurchführung zum Durchbruch der Wand dient. Hierdurch ist im montierten Zustand eine zuverlässige Abdichtung zwischen Kabeldurchführung und Durchbruch sichergestellt.

Dieser Dichtring ist vorzugsweise am Außenumfang der Kabeldurchführung angebracht. Er dient insbesondere für eine Abdichtung in radialer Richtung, wird also in radialer Richtung gegen eine Innenwandung des Durchbruchs gedrückt. Dieser Dichtring ist gemäß einer ersten Ausbildung, insbesondere bei der zuvor beschriebenen ersten Variante, am Außenumfang des Gussmantels angebracht. Gemäß einer zweiten Ausbildung, insbesondere bei der zuvor beschriebenen zweiten Variante, ist der Dichtring am Außenumfang der Hartkomponente angebracht.. In beiden Varianten ist dabei für den Dichtring in bevorzugter Ausgestaltung jeweils eine umlaufende Nut ausgebildet.

Alternativ kann der Dichtring auch in axialer Richtung wirksam sein und beispielsweise an einem Ringflansch angeordnet sein, welcher im montierten Zustand in axialer Richtung gegen einen den Durchbruch begrenzenden Wandungsabschnitt gepresst wird. Auch hierbei ist der Dichtring bevorzugt am Gussmantel oder alternativ an der Hartkomponente insbesondere in einer Dichtnut einliegend angebracht.

Die Hartkomponente weist in bevorzugter Ausgestaltung einen radial nach außen abstehenden Steg, insbesondere einen Ringsteg auf. Dieser ist bevorzugt an einem rückseitigen Ende der Hartkomponente, also gegenüberliegend zum vorderen Teilbereich ausgebildet. Durch diesen Steg wird der Gussmantel formschlüssig hintergriffen, sodass eine gute formschlüssige Verbindung zwischen Hartkomponente und Mantel ausgebildet ist. Gleichzeitig dient dieser Steg zu einer Erhöhung der Kontaktfläche und damit zur Vergrößerung der stoffschlüssigen Verbindungsfläche zum Gussmantel. Hierdurch wird ein potentieller Leckagepfad verlängert, wodurch die Dichtwirkung verbessert wird.

Die Hartkomponente weist innenseitig, also speziell an einer Innenwandung der zumindest einen Durchgangsöffnung, vorzugsweise weiterhin einen Anschlag, beispielsweise nach Art eines nach innen ausgeformten Ringstegs auf. Dieser Anschlag ist dabei insbesondere am vorderen, stirnseitigen Ende der Hartkomponente ausgebildet. An diesem Anschlag liegt das Dichtelement an und wird durch diesen daher in axialer Richtung formschlüssig gehalten. Bei der Variante mit dem Gussmantel liegt dieser am gegenüberliegenden Ende des Dichtelements an, so dass das Dichtelement zwischen dem Anschlag und dem Gussmantel einliegt.

In zweckdienlicher Weiterbildung weist die Hartkomponente an ihrer Außenseite und vorzugsweise in ihrem vorderen Bereich eine Stufe, speziell eine Nut und insbesondere eine umlaufende Ringnut auf. Die Stufe dient insbesondere bei der Herstellung des Gussmantels als Anschlag und in der Variante als Nut für einen formschlüssigen Eingriff in einen Rand der Werkzeugöffnung der Gussform bei der Herstellung des Mantels. Dadurch ist eine insbesondere axiale Fixierung und Positionierung innerhalb der Gussform gewährleistet. Gleichzeitig ist hierdurch auch eine gute Abdichtung beim Gießprozess erreicht.

Bevorzugt weist das zumindest eine Dichtelement umfangsseitig zumindest eine Dichtlippe auf, mit der das Dichtelement zur Hartkomponente hin abdichtet. Gemäß einer bevorzugten Weiterbildung weist das Dichtelement alternativ und insbesondere ergänzend zumindest eine nach innen wirkende Dichtlippe auf. Durch diese wird eine besonders zuverlässige Abdichtung auch zu den Einzelleitungen ermöglicht.

In bevorzugter Ausgestaltung weist das Dichtelement zur Abdichtung zumindest abschnittsweise einen Dichtbalg auf, dessen Wandung gefaltet ist, so dass radial nach innen sowie radial nach außen orientierte Dichtlippen ausgebildet sind.

Bei der Hartkomponente handelt es sich beispielsweise um ein Spritzgussbauteil.

Bei dem zumindest einen Dichtelement und der Hartkomponente handelt es sich vorzugsweise jeweils um separate Bauteile und das zumindest eine Dichtelement ist insbesondere in eine jeweilige Durchgangsöffnung der Hartkomponente eingesetzt, speziell eingepresst. Das Dichtelement wird daher durch die härtere Hartkomponente in radialer Richtung komprimiert. Durch diese Kompression ist eine gute Abdichtung zwischen Dichtelement und Hartkomponente als auch zu den Einzelleitungen erreicht.

Alternativ hierzu ist die Hartkomponente mit dem zumindest einen Dichtelement als eine Baueinheit ausgebildet und Dichtelement und Hartkomponente sind stoffschlüssig miteinander verbunden. Dies wird bei der Herstellung beispielsweise durch einen Zwei-Komponenten Spritzguss erreicht.

Gemäß einer ersten Ausführungsvariante ist die Hartkomponente hülsenförmig ausgebildet mit einer zentralen, gemeinsamen Durchgangsöffnung für mehrere der Einzelleitungen. In dieser gemeinsamen Durchgangsöffnung liegt ein (einziges) gemeinsames, typischerweise scheiben- oder zylinderförmiges und einstückiges Dichtelement ein, welches mehrere einzelne Durchgänge für jeweils eine der Einzelleitungen bzw. eines der abgedichteten Leitungsbündel aufweist. Das gemeinsame Dichtelement kann eine Anzahl von Durchgängen entsprechend einer maximalen Anzahl von Einzelleitungen / abgedichteten Leitungsbündeln aufweisen. Im konkreten Anwendungsfall können nicht benötigte Durchgänge mittels geeigneter Verschlussmittel, wie etwa Blindstopfen, verschließbar oder verschlossen sein. Das gemeinsame Dichtelement wird aufgrund des weichen Materials bei dieser Ausführungsvariante auch als Dichtkissen bezeichnet.

In einer bevorzugten alternativen Variante weist die Hartkomponente selbst einzelne Durchgangsöffnungen jeweils für eine Einzelleitung bzw. für ein jeweiliges abgedichtetes Leitungsbündel auf und in jeder Durchgangsöffnung liegt jeweils ein Dichtelement ein.

Die Hartkomponente kann aber auch eine Anzahl von Durchgangsöffnungen entsprechend einer maximalen Anzahl von Einzelleitungen / abgedichteten Leitungsbündeln aufweisen. Im konkreten Anwendungsfall können nicht benötigte Durchgangsöffnungen dann mittels geeigneter Verschlussmittel, wie etwa Blindstopfen, verschließbar oder verschlossen sein. Es versteht sich, dass in Durchgangsöffnungen, die mittels geeigneter Verschlussmittel verschlossen sind, kein Dichtelement einliegt. Die Hartkomponente ist hierbei beispielsweise scheiben- oder zylinderförmig ausgebildet. Über die Querschnittsfläche sind die Durchgangsöffnungen verteilt.

Grundsätzlich können die beiden Varianten auch miteinander kombiniert werden. Bei einer solchen kombinierten Ausgestaltung liegt daher das Dichtkissen mit den mehreren Durchbrüchen in der Hartkomponente ein und diese weist beispielsweise in einem umlaufenden Randbereich eine oder mehrere weitere Durchgangsöffnungen auf, in denen jeweils ein Dichtelement einliegt.

Ein jeweiliger Durchgang in dem zumindest einen Dichtelement weist dabei vorzugsweise einen geringeren Durchmesser als die jeweilige Einzelleitung bzw. als das jeweilige abgedichtete Leitungsbündel bzw. der Dichtpfropfen auf, sodass ein jeweiliger Durchgang beim Durchstecken einer jeweiligen Einzelleitung bzw. eines abgedichteten Leitungsbündels etwas aufgeweitet wird und / oder die Einzelleitung bzw. der Dichtpfropfen komprimiert wird. Dadurch erfolgt allgemein radiale Komprimierung, so dass das Dichtelement mit einer radialen Anpresskraft gegen den Mantel der jeweiligen Einzelleitung bzw. gegen den Dichtschlauch gepresst ist.

Für eine gute Abdichtung ist zweckdienlicherweise die zumindest eine Durchgangsöffnung und vorzugsweise eine jede Durchgangsöffnung in der Hartkomponente gestuft ausgebildet und weist zumindest und vorzugsweise genau zwei Abschnitte mit unterschiedlichen Durchmessern auf. Der Abschnitt mit dem geringeren Durchmesser ist dabei insbesondere nach vorne orientiert, und der hintere Abschnitt ist - bei einer Ausführungsvariante mit einem Gussmantel - zum Gussmantel hin orientiert.

Zweckdienlicherweise weist das zumindest eine und vorzugsweise jedes Dichtelement korrespondierend zur jeweiligen Durchgangsöffnung zwei Dichtabschnitte mit unterschiedlichen Durchmessern auf.

Durch diese gestufte Ausgestaltung ist eine zuverlässige und sichere Abdichtung erreicht.

In einem der Dichtabschnitte, bevorzugt in dem rückwärtigen Dichtabschnitt mit dem größeren Durchmesser, weist das jeweilige Dichtelement zumindest eine und vorzugsweise mehrere umlaufende Dichtlippen auf, die also zur Hartkomponente, speziell zur Innenwandung einer jeweiligen Durchgangsöffnung hin abdichten.

Die Aufgabe wird gemäß der Erfindung weiterhin gelöst durch ein Verfahren zur Herstellung einer Kabeldurchführung, bei dem zunächst eine Montageeinheit hergestellt wird, bei der die Einzelleitungen eines Leitungsbündels insbesondere einzelweise und / oder als abgedichtetes Leitungsbündel durch zumindest ein Dichtelement geführt sind, wobei das zumindest eine Dichtelement in zumindest einer Durchgangsöffnung einer Hartkomponente aus einem im Vergleich zum Dichtelement härteren Material einliegt.

Speziell wird hierbei derart vorgegangen, dass zunächst die Einzelleitungen durch das zumindest eine Dichtelement beispielsweise entweder einzelweise oder als das abgedichtete Leitungsbündel hindurchgesteckt werden und dass anschließend das zumindest eine Dichtelement in die Hartkomponente eingesteckt, insbesondere eingepresst wird. Dies gilt für beide Varianten, also sowohl für die Variante mit dem Dichtkissen mit den mehreren Durchbrüchen für die Einzelleitungen als auch für die Variante mit den jeweils einzelnen Dichtelementen für jeweils eine einzelne Leitung bzw. für jeweils ein einzelnes abgedichtetes Leitungsbündel. Die einzelnen Dichtelemente werden dann in eine jeweilige Durchgangsöffnung der Hartkomponente eingesteckt.

In bevorzugter Weiterbildung wird diese vorbereitete Montageeinheit in eine Gussform eingelegt und es wird der Gussmantel ausgebildet. Hierzu wird zumindest ein Teilbereich der Hartkomponente zusammen mit einem Abschnitt der mehreren Einzelleitungen vom Gussmantel umgeben. Dies erfolgt durch ein an sich bekanntes Gießen, Spritzen oder Schäumen. Bevorzugt wird ein in situ-Verfahren speziell zur Erzeugung eines Gussmantels aus Gusspolyamid eingesetzt.

Bevorzugt liegt die Hartkomponente dabei mit einem Teilbereich in einen Wandbereich der Gussform ein. Hierzu weist die Hartkomponente insbesondere eine Stufe, speziell eine Nut und insbesondere eine Ringnut auf, an bzw. in der der Wandbereich formschlüssig einliegt. Hierdurch ist eine zuverlässige, insbesondere axiale Positionierung und auch Abdichtung erreicht.

In bevorzugter Weiterbildung ist beim Gießprozess die Gussform vertikal und zwar in axialer Richtung des Leitungsbündels orientiert, wobei die Hartkomponente weiterhin in einem unteren Teilbereich im Wandbereich einliegt. Das obere Ende der Gussform ist dabei insbesondere offen und dient als eine Einfüllöffnung für das Gussmaterial.

Das erfindungsgemäße Herstellungsverfahren lässt sich im Vergleich zu den vorbekannten Verfahren besser automatisieren.

Ausführungsbeispiele der Erfindung werden nachfolgend anhand der Figuren näher erläutert. Diese zeigen
- FIG 1: eine perspektivische Schnittansicht durch eine Kabeldurchführung gemäß einer ersten Variante an einer Wand,
- FIG 2: perspektivische Schnittansicht durch eine Kabeldurchführung gemäß einer zweiten Variante,
- FIG 3: eine perspektivische Darstellung eines Gusswerkzeugs mit darin einliegender Montageeinheit,
- FIG 4: eine Aufsicht auf ein Werkzeug mit darin einliegender Montageeinheit,
- FIG 5: eine Kabeldurchführung gemäß einer alternativen Ausführungsvariante,
- FIG 6: eine Querschnittsdarstellung durch ein Dichtelement mit darin einliegenden abgedichteten Leitungsbündeln sowie
- FIG 7: eine Seitenansicht eines abgedichteten Leitungsbündels mit einem ausgebildeten Dichtpfropfen.

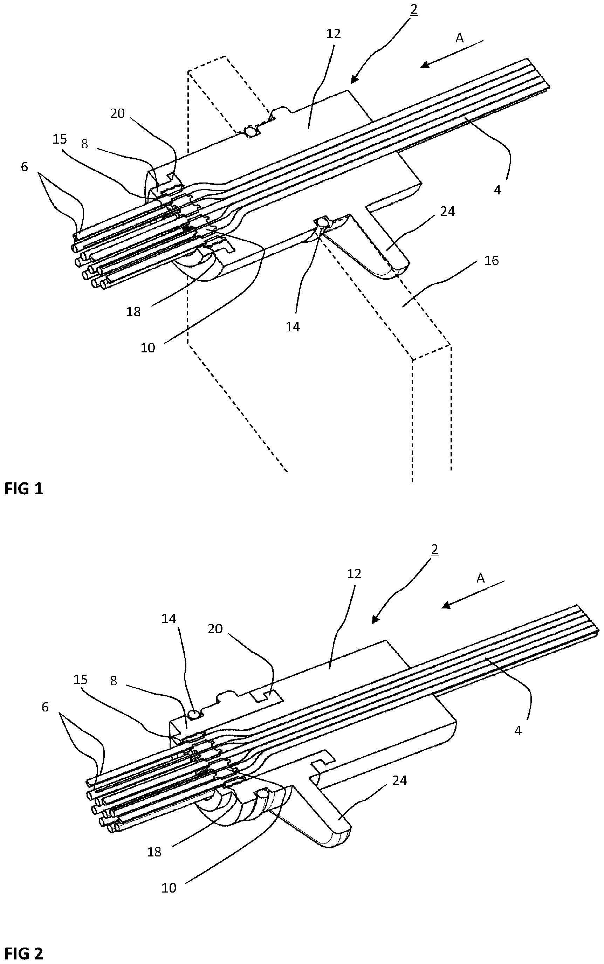

Eine in der FIG 1 sowie in FIG 2 dargestellte Kabeldurchführung 2 weist ein Leitungsbündel 4 mit mehreren Einzelleitungen 6 auf, welches sich in axialer Richtung A von einem rückwärtigen Ende zu einem vorderen Ende erstreckt. Sofern vorliegend von einem vorderen Ende eines jeweiligen Bauteils gesprochen wird, so wird hierunter das in axialer Richtung A vorderste Ende des jeweiligen Bauteils oder der jeweiligen Einheit verstanden. Unter rückwärtigem Ende wird entsprechend das gegenüberliegende Ende des jeweiligen Bauteils oder der Baueinheit verstanden.

Die Kabeldurchführung 2 gemäß FIG 1 weist als wesentliche Bestandteile eine Hartkomponente 8, ein in dieser einliegendes monolithisches Dichtelement 10, einen Gussmantel 12, einen Dichtring 14 sowie die Einzelleitungen 6 auf. Das Dichtelement 10 weist über seine Querschnittsfläche verteilt mehrere axiale Durchbrüche auf, in denen jeweils eine der Einzelleitungen einliegt. Die Hartkomponente 8 ist im Ausführungsbeispiel der FIG 1 als eine Hülse ausgebildet, welche eine gemeinsame, zentrale Durchgangsöffnung 15 aufweist, in der das Dichtelement 10 einliegt.

Die Kabeldurchführung 2 ist in einem Durchbruch einer Wand 16 angeordnet. Im dargestellten Ausführungsbeispiel ist sie durch den Durchbruch in axialer Richtung A hindurchgesteckt und ragt aus der Wand 16 wieder hervor. Alternativ ist sie lediglich an einer Seite her in den Durchbruch eingesteckt. Die Kabeldurchführung 2 erstreckt sich in Axialrichtung A lediglich über eine kurze Länge und steht beispielsweise einseitig / beidseitig der Wand 16 maximal um mehrere Zentimeter (beispielsweise 2-1 0cm oder maximal 2-5cm) über.

Eine jeweilige Einzelleitung 6 ist in einem jeweiligen Durchgang des Dichtelements 10 in den in den Figuren 1 bis 5 dargestellten Varianten einzelweise hindurchgeführt. Die Anzahl der Durchgänge im Dichtelement 10 entspricht zumindest der Anzahl der Einzelleitungen 6. Es können mehr Durchgänge als Einzelleitungen 6 vorgesehen sein. Die nicht benötigten Durchgänge sind beispielsweise durch Blindstopfen verschlossen. Die Durchmesser der Durchgänge sind im Ausgangszustand geringer als der Außendurchmesser einer jeweiligen Einzelleitung 6, sodass eine zuverlässige Abdichtung erreicht ist.

Bevorzugt ist der Außendurchmesser des Dichtelements 10 im Ausgangszustand größer als der Innendurchmesser der Hartkomponente 8, sodass das Dichtelement 10 in der Hartkomponente 8 eingepresst ist.

Das Dichtelement 10 besteht allgemein aus einem weicheren Material im Vergleich zu dem der Hartkomponente 8. Für das Material des Dichtelements 10 wird insbesondere ein Elastomer, wie beispielsweise ein Silikon, ein Fluorelastomer oder auch ein thermoplastisches Elastomeren eingesetzt. Für die Hartkomponente wird demgegenüber ein härteres Material, beispielsweise Polyamid eingesetzt.

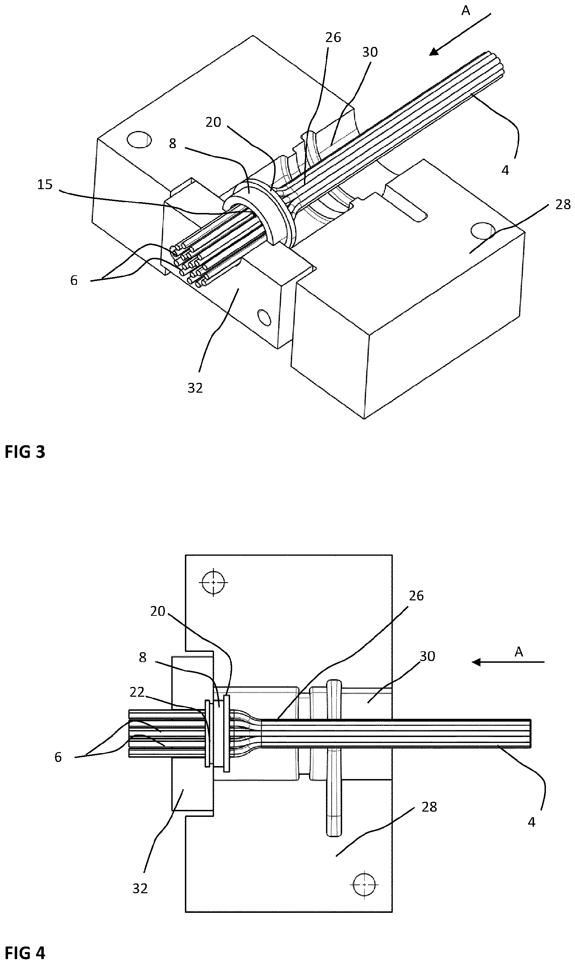

Im Bereich ihres vorderen Endes weist die Hartkomponente 8 einen inneren, ringförmigen Anschlag 18 auf, an dem das Dichtelement 10 anliegt. Am gegenüberliegenden, rückwärtigen Ende weist die Hartkomponente 8 weiterhin einen radial nach außen abstehenden Ringsteg 20 auf. Optional weist die Hartkomponente 8 im vorderen Bereich ergänzend noch eine Stufe, speziell eine Ringnut 22 auf, wie sie in der FIG 3 erkennbar ist.

Die Hartkomponente 8 ist insgesamt im Ausführungsbeispiel als eine Hülse ausgebildet, welche an ihrem rückseitigen Ende den nach Art eines abgewinkelten Kragens abstehenden Ringsteg 20 und an seinem vorderen Ende den radial nach innen stehenden ringförmigen Anschlag 18 aufweist.

Die Hartkomponente 8 ist nur teilweise im Gussmantel 12 eingebettet. Ein vorderer Teilbereich der Hartkomponente 8 steht in axialer Richtung A über ein vorderes Ende des Gussmantel 12 über. Durch den radial abstehenden Ringsteg 20 ist eine gute formschlüssige Sicherung der Hartkomponente 8 innerhalb des Gussmantels 12 erreicht. Gussmantel 12 und Hartkomponente 8 bestehen vorzugsweise aus dem gleichen Material.

Das Dichtelement 10 besteht demgegenüber allgemein aus einem zur Hartkomponente 8 verschiedenen, weicheren Material.

Der Gussmantel 12 weist in einem rückwärtigen Teilbereich einen radial abstehenden Kragen 24 auf. Im Ausführungsbeispiel ist dieser vollständig umlaufend ausgebildet, wobei er insbesondere asymmetrisch ausgebildet ist und in einem Teilbereich eine größere radiale Ausdehnung nach Art einer Lasche aufweist. Dieser Kragen 24 dient als Anschlag oder auch als ein Befestigungsflansch, mit dem die Kabeldurchführung 2 in der Einbausituation, wie sie in der FIG 1 durch die gestrichelte Wand 16 dargestellt ist, an dieser Wand 16 anliegt.

Weiterhin ist im Gussmantel 12 eine umlaufende Nut ausgebildet, in der der Dichtring 14 einliegt. Dieser dichtet zu einem innen den Wandungsbereich des Durchbruches der Wand 16 in radialer Richtung ab.

FIG 2 zeigt eine im Vergleich zu der in FIG 1 dargestellten ersten Variante eine abgewandelte zweite Variante. Diese unterscheidet sich zu der ersten Variante der FIG 1 dadurch, dass die Hartkomponente 8 länger ausgeführt ist und einen Teilbereich des Gussmantels 12 der ersten Variante gemäß FIG 1 ausbildet. Bevorzugt ist die Außengeometrie der Kabeldurchführung 2 der beiden Varianten identisch.

So ist bei der zweiten Variante gemäß FIG 2 die umlaufende Nut, in der der Dichtring 14 einliegt, in der Hartkomponente 8 ausgebildet. Vorzugsweise weist die Hartkomponente 8 auch den Kragen 24 auf. Bei dieser zweiten Variante ist der Ringsteg 20 in Axialrichtung vor dem Kragen angeordnet.

Der Gussmantel 12 umgreift lediglich ein kurzes hinteres Teilstück der Hartkomponente 8, Dieses weist in Axialrichtung beispielsweise lediglich eine Länge von 1cm bis 2cm auf. Das vordere Teilstück der Hartkomponente 8 ist demgegenüber um ein Vielfaches länger. Der Gussmantel 12 endet in Axialrichtung betrachtet am Außenumfang insbesondere vor dem Kragen 24.

Im Übrigen ist entspricht die zweite Variante der ersten Variante. Insbesondere ist die Hartkomponente 8 wiederum als Hülse ausgebildet, in der das Dichtelement 10 einliegt, welches bevorzugt identisch zu dem zur FIG 1 beschriebenem Dichtelement 10 ist.

Da bei der zweiten Variante der Kragen 24 Teil der Hartkomponente 8 ist, besteht der Gussmantel 12 bevorzugt aus einem weicheren Material als die Hartkomponente, insbesondere beispielsweise aus Polyamid oder Polyurethan. Bei dem Gussmantel 12 handelt es sich beispielsweise um einen geschäumten Mantel. Die Hartkomponente 8 besteht beispielsweise aus einem insbesondere mit Füllstoffen versehenen Polyamid.

Bei der ersten Variante gemäß FIG 1 bestehen demgegenüber die Hartkomponente 8 und der Gussmantel 12 aus dem gleichen Material, insbesondere Polyamid, welches bevorzugt mit Füllstoffen versehen ist.

Die Herstellung der Kabeldurchführung 2 wird beispielhaft für die erste Variante der FIG 1 anhand der FIG 3 und FIG 4 erläutert: Zunächst wird die Montageeinheit 26 bestehend aus dem Leitungsbündel 4, der Hartkomponente 8 und dem Dichtelement 10 bereitgestellt und in eine Gussform 28 eingelegt. Zur Ausbildung der Montageeinheit 26 werden zunächst die Einzelleitungen 6 durch die einzelnen Durchbrüche innerhalb des Dichtelements 10 axial hindurchgesteckt. Bei einer geschlitzten Ausführungsvariante des Dichtelements 10 können die Einzelleitungen auch radial eingeführt werden. Anschließend wird das Dichtelement 10 in die Durchgangsöffnung der Hartkomponente 8 eingepresst.

In FIG 3 und FIG 4 ist lediglich eine Werkzeughälfte der Gussform 28 dargestellt. Diese weist eine Kavität 30 für die Ausbildung des Gussmantels 12 auf. Zu erkennen sind hierbei auch die erforderlichen Nuten und Aussparungen in der Wandung der Gussform 28 zur Ausbildung der Nut für den Dichtring 14 sowie für den Kragen 24.

An deren vorderen Ende ist die Kavität 30 stirnseitig begrenzt und weist einen Wanddurchbruch auf. Im Ausführungsbeispiel ist die Kavität 30 stirnseitig durch ein separates Bauteil 32 begrenzt, welches auch als Kabeldruckleiste bezeichnet wird und den Wanddurchbruch aufweist. Die Hartkomponente 8 liegt mit ihrem vorderen Teilbereich in dem Wanddurchbruch und damit in diesem separaten Bauteil 32 ein. Bei der Ausführungsvariante mit der Ringnut 22, wie sie in der FIG 4 dargestellt ist, greift das Bauteil 32 in diese Ringnut 22 ein, sodass die Hartkomponente 8 und damit die gesamte Montageeinheit 26 in Axialrichtung 8 ortsfest fixiert ist.

Eine derartige Ringnut 22 ist beispielsweise auch bei der zweiten Variante gemäß FIG 2 vorgesehen. Alternativ greift das Bauteil 32 in die umlaufende Nut für den Dichtring 14 ein.

Bei geschlossener Gussform 28, wenn also die zweite Werkzeughälfte aufgesetzt ist, wird das Gussmaterial vorzugsweise vom rückwärtigen Ende her in die Kavität 30 eingefüllt. Bevorzugt wird die Gussform 28 dabei vertikal aufgestellt, d.h. die axiale Richtung A ist in Vertikalrichtung nach unten orientiert. Die Hartkomponente 8 ist daher vertikal unten angeordnet und das Gussmaterial wird von oben eingefüllt, so dass die Gussform von unten sukzessive gefüllt wird.

Bei dem Material handelt es sich insbesondere um ein flüssiges, beispielsweise wässriges Material. Insbesondere werden die Ausgangskomponenten für eine in situ-Polymerisation eingebracht und die eigentliche Polymerisation erfolgt dann erst in der Gussform 28, wie dies beispielsweise in der DE 10 2020 216 431 A1 oder auch der DE 10 2015 205 292 A1 beschrieben ist.

Nach der Aushärtung wird die fertige Kabeldurchführung 2 aus der Gussform 28 entnommen.

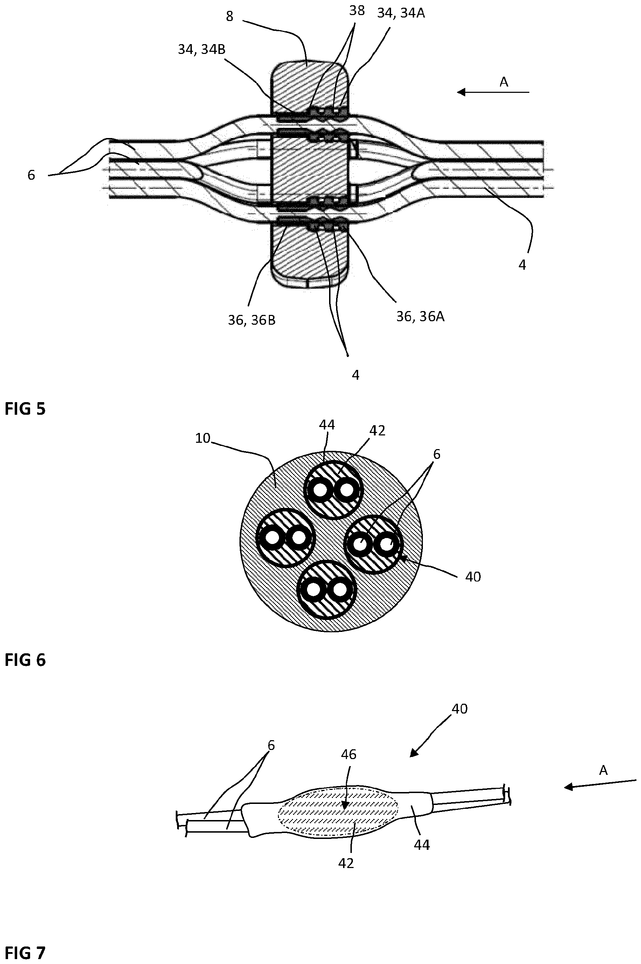

FIG 5 zeigt im Vergleich zu den Ausgestaltungen mit der hülsenförmigen Hartkomponente 8 gemäß den FIG 1 und FIG 2 eine alternative Ausführungsvariante einer Kabeldurchführung 2. Im Unterschied zu der Kabeldurchführung 2 gemäß FIG 1 oder FIG 2 weist die Hartkomponente 8 eine Vielzahl von einzelnen Durchgangsöffnungen 34 auf, wobei durch jede der Durchgangsöffnungen 34 jeweils eine Einzelleitung 6 hindurchgeführt ist. Dabei ist in jeder der Durchgangsöffnungen 34 ein Dichtelement 36 eingesetzt. Bei diesen Dichtelementen 36 handelt sich daher jeweils um einzelne Dichtungen für jeweils eine Einzelleitung 6.

Im Ausführungsbeispiel sind die Durchgangsöffnungen 34 gestuft ausgebildet und weisen einen hinteren Abschnitt 34A sowie einen vorderen Abschnitt 34B auf, die unter Ausbildung einer Stufe ineinander übergehen, wobei der vordere Abschnitt 34B einen verringerten Durchmesser aufweist.

Das Dichtelement 36 weist korrespondierend hierzu ebenfalls einen hinteren Dichtabschnitt 36A sowie einen vorderen Dichtabschnitt 36B auf, die jeweils passgenau und dichtend in den korrespondierenden Abschnitten 34A, 34B einliegen. Das Dichtelement 36 weist im Ausführungsbeispiel im hinteren Dichtabschnitt 36A mehrere Dichtlippen 38 auf, die radial abstehen.

Die in der FIG 5 dargestellte Hartkomponente 4 ist bei der endgefertigten Kabeldurchführung 2 ebenfalls von einem Gussmantel 12 umgeben, wie er im Zusammenhang mit den FIG 1-4 erläutert wurde. Die Außenkontur der Hartkomponente 8 ist dabei beispielsweise analog zu der Hartkomponente 8 ausgebildet, wie sie zu den FIG 1-4 beschrieben wurde.

Gemäß einer hier nicht dargestellten Ausführungsvariante ist eine kombinierte Hartkomponente 8 ausgebildet, bei der beispielsweise ausgehend von der Ausgestaltung der hülsenförmigen Hartkomponente 8 gemäß den FIG 1-4 in der ringförmigen Außenwandung zusätzliche Durchgangsöffnungen 34 eingebracht sind, durch die unter Zwischenlage jeweils eines Dichtelements 36 Einzelleitungen 6 hindurchgeführt sind.

Bei der Ausführungsvariante gemäß FIG 6 und FIG 7 sind jeweils abgedichtete Leitungsbündel 40 gemeinsam durch jeweils eine Öffnung im Dichtelement 10 hindurchgeführt. Das abgedichtete Leitungsbündel 40 weist hierbei auf und ist insbesondere abschließend gebildet durch mehrere Einzelleitungen 6, einem Dichtmaterial 42 sowie einen die Einzelleitungen 6 und das Dichtmaterial 42 umgebenden Dichtschlauch 44. Das Dichtmaterial 42 füllt Hohlräume zwischen den Einzelleitungen 6 vollständig aus. Bei dem Dichtmaterial 42 handelt es sich beispielsweise um eine pastöse Dichtmasse insbesondere aus Butyl. Alternativ hierzu handelt es sich um ein Hotmelt-Material. Dieses liegt im Ausgangszustand insbesondere als ein Formteil, speziell als ein Dichtstern vor, welcher beispielsweise umfangsseitig einzelne Aufnahmen für die Einzelleitungen 6 aufweist, in die diese eingelegt sind. Ein solches Formteil (Dichtstern) kann alternativ auch aus einem geeigneten elastomeren Dichtmaterial bestehen.

Bei den Einzelleitungen 6 des jeweils abgedichteten Leitungsbündels 40 handelt es sich insbesondere um miteinander verdrillte Einzelleitungen 6. Im Ausführungsbeispiel weist jedes abgedichtete Leitungsbündel genau ein verdrilltes Leitungspaar auf. Alternativ sind beispielsweise auch mehr als zwei Einzelleitungen 6 miteinander verdrillt oder es sind mehrere paarweise verdrillte Einzelleitungen 6 innerhalb eines abgedichteten Leitungsbündels 40 angeordnet.

Bei dem Dichtschlauch 44 handelt es sich insbesondere um einen Schrumpfschlauch. Der Dichtschlauch 44 weist vorzugsweise an seiner Innenseite Klebstoff auf, sodass eine Klebverbindung mit dem innen einliegenden Dichtmaterial 42 bzw. den Einzelleitungen 6 ausgebildet ist.

Der Dichtschlauch 44 erstreckt sich vorzugsweise lediglich über einen Teilabschnitt der Einzelleitungen 6 in axialer Richtung A und ist insbesondere nur im Bereich des Dichtelements 10 angebracht. Im weiteren Verlauf, insbesondere auch im Bereich des Gussmantel 12 liegen die Einzelleitungen 6 wieder frei und sind gerade nicht vom Dichtschlauch 44 und dem Dichtmaterial 42 umgeben.

Durch das nur bereichsweise Aufbringen des Dichtmaterials 42 und des Dichtschlauchs 44 ist insgesamt ein lokaler Dichtpfropfen 46 ausgebildet, mit dem das abgedichtete Leitungsbündel 40 in einer jeweiligen Öffnung des Dichtelements 10 einliegt.

Dieser Dichtpfropfen 46 ist gut anhand von FIG 7 zu erkennen, die eine ausschnittsweise eine Seitenansicht eines abgedichteten Leitungsbündels 40 zeigt, welches gemäß FIG 7 genau ein verdrilltes Leitungspaar aufweist.

Zu erkennen ist, dass sich der Dichtschlauch 44 nur über einen Teilabschnitt erstreckt und im Bereich des eingebetteten und zu Illustrationszwecken gestrichelt dargestellten Dichtmaterials 42 eine Verdickung ausgebildet ist. Der Dichtschlauch 44 steht vorzugsweise beidseitig über das Dichtmaterial 42 über und liegt daher im überstehenden Abschnitt jeweils unmittelbar an den Einzelleitungen 6 an. Insgesamt ist dadurch der Dichtpfropfen 46 ausgebildet, welcher in Seitenansicht beispielsweise nach Art einer Ellipse ausgebildet ist.

Das so mit dem Dichtpfropfen 46 vorbereitete Bündel aus Einzelleitungen 6 wird bei Bedarf noch einer Wärmebehandlung unterzogen, sodass der bevorzugt als Schrumpfschlauch ausgebildete Dichtschlauch 44 und/oder das Dichtmaterial 42 erwärmt wird, sodass eine zuverlässige Längsabdichtung der Einzelleitungen 6 erreicht wird.

Die Länge des Dichtpfropfens 46 axialer Richtung A entspricht beispielsweise maximal der doppelten Materialdicke des Dichtelements 10 in axialer Richtung A.

Das Bündel aus den mehreren Einzelleitungen 6 zusammen mit dem ausgebildeten Dichtpfropfen 46 wird anschließend durch das Dichtelement 10 hindurchgeführt.

Die zuvor beschriebenen Ausführungsvarianten, bei denen jeweils die Einzelleitungen 6 einzelweise durch eine jeweilige Öffnung im Dichtelement 10 hindurchgeführt worden, gelten gleichermaßen für die Verwendung eines solchen abgedichteten Leitungsbündels 40. D. h. in den zuvor beschriebenen Ausführungsvarianten lassen sich die dargestellten Einzelleitungen 6 durch jeweils ein abgedichtetes Leitungsbündel 40 ersetzen oder zumindest einige der Einzelleitungen 6 werden durch ein abgedichtetes Leitungsbündel 40 ersetzt. Werden Einzelleitungen 6 mit abgedichteten Leitungsbündeln 40 kombiniert, so weist das Dichtelement 10 typischerweise Öffnungen (Durchgänge) mit unterschiedlichen Durchmessern auf.

Die zuvor zu den Figuren 1 bis 5 erläuterten Vorteile und Ausführungsvarianten mit der einzelweisen Durchführung der Einzelleitungen 6 gelten sinngemäß gleichermaßen auch für die Variante mit dem abgedichteten Leitungsbündel 40.

### Bezugszeichenliste

- 2: Kabeldurchführung
- 4: Leitungsbündel
- 6: Einzelleitungen
- 8: Hartkomponente
- 10: Dichtelement
- 12: Gussmantel
- 14: Dichtring
- 15: gemeinsame Durchgangsöffnung
- 16: Wand
- 18: Anschlag
- 20: Ringsteg
- 22: Ringnut
- 24: Kragen
- 26: Montageeinheit
- 28: Gussform
- 30: Kavität
- 32: Bauteil
- 34: Durchgangsöffnung
- 34A: hinterer Abschnitt
- 34B: vorderer Abschnitt
- 36: Dichtelement
- 36A: hinterer Dichtabschnitt
- 36B: vorderer Dichtabschnitt
- 38: Dichtlippe
- 40: abgedichtetes Leitungsbündel
- 42: Dichtmaterial
- 44: Dichtschlauch
- 46: Dichtpfropfen

- A: axiale Richtung

## Patentansprüche

1. Kabeldurchführung (2) zur Durchführung eines Leitungsbündels (4) mit mehreren Einzelleitungen (6) durch einen Durchbruch einer Wand (16), wobei die Einzelleitungen (6) durch zumindest ein Dichtelement (10, 36) geführt sind und das zumindest eine Dichtelement (10, 36) in zumindest einer Durchgangsöffnung (15, 34) einer Hartkomponente (8) einliegt, die aus einem im Vergleich zum Dichtelement (10, 36) härteren Material ausgebildet ist, wobei ein Teilbereich der Hartkomponente (8) zusammen mit zumindest einem Abschnitt der mehreren Einzelleitungen (6) von einem Gussmantel (12) umgeben ist.

2. Kabeldurchführung (2) nach dem vorhergehenden Anspruch, bei dem die Einzelleitungen (6) einzelweise durch das zumindest eine Dichtelement (10,36) geführt sind.

3. Kabeldurchführung (2) nach einem der vorhergehenden Ansprüche, bei dem mehrere Einzelleitungen (6), insbesondere ein verdrilltes Leitungspaar, zumindest im Bereich des Dichtelements (10, 36) in einem Dichtschlauch (44) zusammen mit einem Dichtmaterial (42) einliegen und ein abgedichtetes Leitungsbündel (40) bilden, welches durch das zumindest eine Dichtelement (10,36) geführt ist.

4. Kabelführung nach einem der beiden vorhergehenden Ansprüche, bei dem es sich bei dem Dichtschlauch (44) um einen Schrumpfschlauch handelt und / oder der Dichtschlauch (44) an seiner Innenseite einen Klebstoff aufweist.

5. Kabelführung (2) nach dem vorhergehenden Anspruch, bei dem es sich bei dem Dichtmaterial (42) um ein pastöses Dichtmaterial oder um ein Hotmelt-Dichtmaterial handelt.

6. Kabeldurchführung (2) nach einem der vorhergehenden Ansprüche, welche außenseitig einen radial abstehenden Kragen (24) aufweist, welcher gemäß einer ersten Variante am Gussmantel (12) oder gemäß einer zweiten Variante an der Hartkomponente (8) ausgeformt ist.

7. Kabeldurchführung (2) nach dem vorhergehenden Anspruch, bei dem die Hartkomponente (8) mit einem Teilbereich über den Gussmantel (12) hervorsteht, wobei der hervorstehende Teilbereich bevorzugt eine Länge von maximal 0,25cm bis 3cm aufweist.

8. Kabeldurchführung (2) nach einem der vorhergehenden Ansprüche, bei dem die Hartkomponente (8) einen radial nach außen abstehenden Steg, insbesondere einen Ringsteg (20) aufweist.

9. Kabeldurchführung (2) nach einem der vorhergehenden Ansprüche, bei dem die Hartkomponente (8) einen Anschlag (18) aufweist, an dem das Dichtelement (10, 36) anliegt.

10. Kabeldurchführung (2) nach einem der vorhergehenden Ansprüche, bei dem die Hartkomponente (8) außenseitig eine Stufe, insbesondere eine Nut und speziell eine Ringnut (22) aufweist.

11. Kabeldurchführung (2) nach einem der vorhergehenden Ansprüche, bei dem das zumindest eine Dichtelement (10, 36) umfangsseitig zumindest eine Dichtlippe (38) aufweist, mit dem es zur Hartkomponente (8) hin abdichtet.

12. Kabeldurchführung (2) nach einem der vorhergehenden Ansprüche, bei dem das zumindest eine Dichtelement (10, 36) ein separates Bauteil ist, welches in der Hartkomponente (8) eingelegt ist, wobei das Dichtelement (10, 36) insbesondere in die Hartkomponente (8) eingepresst ist.

13. Kabeldurchführung (2) nach einem der vorhergehenden Ansprüche, bei dem die Hartkomponente (8) hülsenförmig ist und
- das zumindest eine Dichtelement (10) einzelne Durchgänge für jeweils eine der Einzelleitungen (6) und / oder für ein Bündel der Einzelleitungen (6) aufweist, oder
- bei dem die Hartkomponente (8) selbst einzelne Durchgangsöffnungen (34) jeweils für eine Einzelleitung (6) und / oder für ein Bündel der Einzelleitungen (6) aufweist und in jeder Durchgangsöffnung (34) jeweils ein Dichtelement (36) einliegt.

14. Kabeldurchführung (2) nach einem der vorhergehenden Ansprüche, bei dem die zumindest eine und vorzugsweise jede Durchgangsöffnung (15, 34) in der Hartkomponente (8) gestuft ausgebildet ist und zwei Abschnitte (34A, 34B) mit unterschiedlichen Durchmessern aufweist und wobei das zumindest eine Dichtelement (10, 36) korrespondierend zur jeweiligen Durchgangsöffnung (15, 34) vorzugsweise zwei Dichtabschnitte (36A, 36B) mit unterschiedlichen Durchmessern aufweist.

15. Verfahren zur Herstellung einer Kabeldurchführung (2) nach einem der vorhergehenden Ansprüche, bei dem eine Montageeinheit (26) hergestellt wird, bei der Einzelleitungen (6) eines Leitungsbündels (4) durch zumindest ein Dichtelement (10, 36) geführt sind, welches in zumindest einer Durchgangsöffnung (15, 34) einer Hartkomponente (8) einliegt, die aus einem im Vergleich zum Dichtelement (10, 36) härteren Material ausgebildet ist.
